(19) Europäisches Patentamt
European Patent Office
Office européen des brevets

(11) **EP 2 081 305 A1**

(12) **EUROPEAN PATENT APPLICATION**
published in accordance with Art. 153(4) EPC

(43) Date of publication:
**22.07.2009 Bulletin 2009/30**

(51) Int Cl.:
***H04B 7/26*** (2006.01)

(21) Application number: **07830941.6**

(22) Date of filing: **31.10.2007**

(86) International application number:
**PCT/JP2007/071207**

(87) International publication number:
**WO 2008/056582 (15.05.2008 Gazette 2008/20)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **08.11.2006 JP 2006303163**

(71) Applicant: **NTT DoCoMo, Inc.**
**Chiyoda-ku**
**Tokyo 100-6150 (JP)**

(72) Inventors:
• **ISHII, Hiroyuki**
**Tokyo 1006150 (JP)**
• **NAKAMURA, Takehiro**
**Tokyo 1006150 (JP)**

(74) Representative: **HOFFMANN EITLE**
**Patent- und Rechtsanwälte**
**Arabellastraße 4**
**81925 München (DE)**

(54) **MOBILE COMMUNICATION SYSTEM, BASE STATION, MOBILE STATION, AND COMMUNICATION CONTROL METHOD**

(57) A mobile communication system including a base station and a mobile station for communicating with the base station includes a control unit configured to perform uplink transmission power control based on a type of a frequency-adjacent system.

FIG.9

START

ACQUIRE INFORMATION ABOUT FREQUENCY-ADJACENT SYSTEM — S1

TYPE OF FREQUENCY ADJACENT SYSTEM? — S2

WCDMA / LTE

DETERMINE RECEIVED POWER LEVEL THRESHOLD Th1 AS −100 dBm — S3

DETERMINE RECEIVED POWER LEVEL THRESHOLD Th1 AS −90 dBm — S4

DETERMINE ABSOLUTE ALLOWABLE LEVEL (ABSOLUTE GRANT) FOR MOBILE STATION $10_n$ BASED ON RECEIVED POWER LEVEL THRESHOLD Th1, UPLINK RECEIVED POWER LEVEL, AND RECEIVED POWER LEVEL OF SOUNDING REFERENCE SIGNAL FOR MOBILE STATION $10_n$ AND NOTIFY MOBILE STATION $10_n$ OF ABSOLUTE ALLOWABLE LEVEL — S5

DETERMINE TRANSMISSION POWER OF UPLINK SHARED CHANNEL BASED ON ABSOLUTE ALLOWABLE LEVEL (ABSOLUTE GRANT) AND TRANSMISSION POWER OF SOUNDING REFERENCE SIGNAL — S6

END

**Description**

**TECHNICAL FIELD**

The present invention relates to a mobile communication system, a base station, a mobile station, and a communication control method. Specifically, the present invention relates to a mobile communication system, a base station, a mobile station, and a communication control method for performing uplink transmission power control.

**BACKGROUND ART**

Typically, frequency bands available for radio systems such as mobile phone systems, radio astronomy systems, satellite communication systems, air or ocean radar systems, earth resource sensing systems, and wireless LANs are separated in order to avoid interference from other systems. For example, multiple systems use frequency bands assigned to a cellular phone system and the frequency bands for the respective systems are separated from each other.

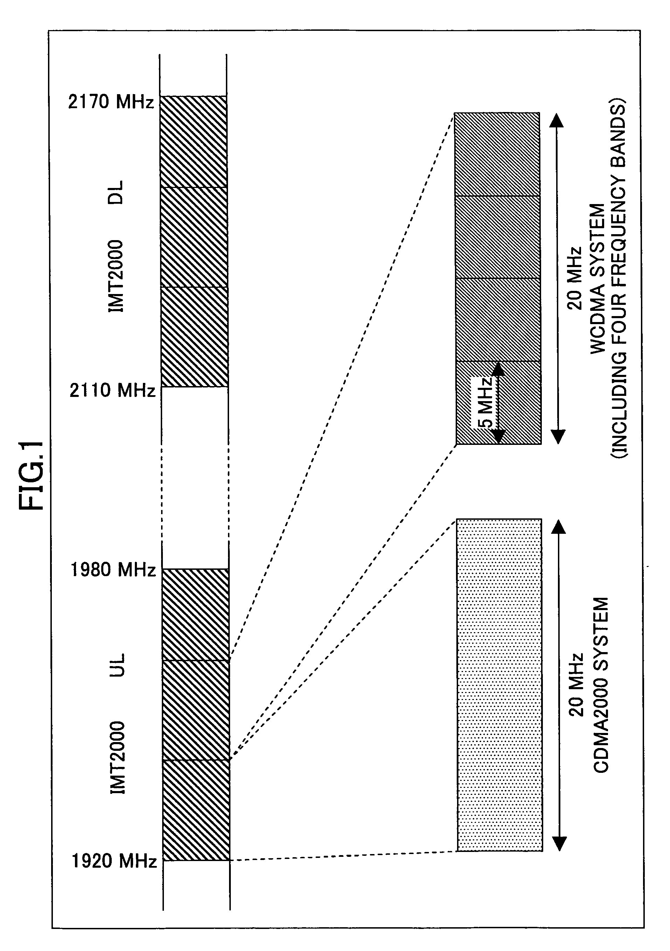

For example, Fig. 1 shows separated frequency bands assigned to a 2-GHz band cellular phone system. For example, 1920 MHz - 1980 MHz is assigned to uplink (UL) communications in IMT-2000 (International Mobile Telecommunication-2000), among which 1940 MHz - 1960 MHz is assigned to WCDMA (Wideband Code Division Multiple Access) systems. Furthermore, 1940 MHz - 1960 MHz of the frequency band is divided into four frequency bands for four WCDMA systems, since the WCDMA systems have 5 MHz of the bandwidth.

In summary, radio systems can avoid interference from other systems by separation of available frequency bands. However, transmitters for emitting radio waves can emit unnecessary waves (hereinafter referred to as adjacent channel interference) out of the system frequency band. Even though frequency bands are separated from each other, multiple adjacent systems may produce interference with each other. When the power levels of the unnecessary waves are high, the unnecessary waves may have an adverse effect on the adjacent systems.

In order to avoid the adverse effect on the adjacent systems due to adjacent channel interference, properties regarding adjacent channel interference are defined. For example, for the 3GPP WCDMA system, properties regarding adjacent channel interference in a base station are defined in 3GPP TS25.104, v6.13.0, "6.6 Output RF spectrum emissions", and properties regarding adjacent channel interference in a mobile station are defined in 3GPP TS25.101, v6.13.0, "6.6 Output RF spectrum emissions".

These definitions regarding adjacent channel interference can help reduce unnecessary waves from transmitters to some extent. Even though the unnecessary waves are reduced, interference due to the unnecessary waves still remains. For example, when transmission power in the transmitter is high, the amount of interference in adjacent systems becomes large. In other words, the amount of interference in adjacent systems depends on transmission power control in the transmitter.

In 3GPP, which is organized by regional standardizing bodies or the like, standard specifications for the WCMDA system as a third generation mobile communication system are defined. Specifically, for the purpose of high speed transmissions in the WCDMA system, HSDPA for downlink communications are defined in 3GPP TS25.308, v6.3.0 and HSUPA for uplink communications are defined in 3GPP TS25.309, v6.6.0. Furthermore, for the purpose of higher speed transmissions, specifications for Long Term Evolution (LTE) are under discussion in 3GPP (see 3GPP TS25.912 v7.1.0).

Since the WCDMA system and the HSUPA system are non-orthogonal CDMA systems in uplink communications and have a Near-Far problem, their uplink capacities are restricted by the noise rise in the base station. Specifically, the uplink capacity is restricted, when the received level in the base station increases to a certain level.

The LTE system, on the other hand, employs SC-FDMA (Single-Carrier Frequency Division Multiple Access) in which orthogonality is achieved in uplink communications and does not have the Near-Far problem. Accordingly, its capacity is not restricted by the noise rise. In the LTE system, its capacity depends on received SIR (Signal-to-Interference Ratio) in the base station.

In the WCDMA system or the HSUPA system whose capacity is restricted by the noise rise, the noise rise increases due to interference from adjacent systems, and consequently its capacity is reduced. In other words, the WCDMA system or the HSUPA system exhibits less tolerance for interference from adjacent systems. In the LTE system whose capacity is not restricted by the noise rise, the noise rise due to interference from adjacent systems does not directly affect the capacity. Consequently the LTE system exhibits much tolerance for interference from adjacent systems.

**DISCLOSURE OF INVENTION**

[PROBLEM(S) TO BE SOLVED BY THE INVENTION]

As described above, it is necessary to restrict the amount of interference on adjacent channels depending on whether adjacent mobile communication systems exhibit much tolerance for adjacent channel interference, for example, depending on whether the system capacity is restricted by the noise rise.

On the other hand, it is possible to decrease transmission power in the transmitter by means of transmission power control to reduce the amount of interference on adjacent channels.

In view of the aforementioned problems, it is a general object of the present invention to provide a mobile communication system, a base station, a mobile station, and a communication control method capable of reducing an adverse effect in adjacent systems and providing appropriate mobile communication services by means of uplink transmission power control.

[MEANS FOR SOLVING THE PROBLEM(S)]

In one aspect of the present invention, there is provided a mobile communication system including a base station and a mobile station for communicating with the base station, including:

a control unit configured to perform uplink transmission power control based on a type of a frequency-adjacent system.

In another aspect of the present invention, there is provided a base station in a mobile communication system including the base station and a mobile station for communicating with the base station, including:

a control unit configured to perform uplink transmission power control based on a type of a frequency-adjacent system.

In another aspect of the present invention, there is provided a mobile station in a mobile communication system including a base station and the mobile station for communicating with the base station, including:

a control unit configured to perform uplink transmission power control based on a type of a frequency-adjacent system.

In another aspect of the present invention, there is provided a communication control method in a mobile communication system including a base station and a mobile station for communicating with the base station, including the step of:

performing uplink transmission power control based on a type of a frequency-adjacent system.

[ADVANTAGEOUS EFFECT OF THE INVENTION]

According to an embodiment of the present invention, it is possible to provide a mobile communication system, a base station, a mobile station, and a communication control method capable of reducing an adverse effect in adjacent systems and providing appropriate mobile communication services by means of uplink transmission power control.

**BRIEF DESCRIPTION OF THE DRAWINGS**

Fig. 1 shows frequency assignments in a 2-GHz band.
Fig. 2 shows a mobile communication system in accordance with one embodiment of the present invention.
Fig. 3 shows a partial block diagram of a base station in accordance with one embodiment of the present invention.
Fig. 4 shows a block diagram of a baseband signal processing unit in the base station in accordance with one embodiment of the present invention.
Fig. 5 shows an example of frequency-adjacent systems.
Fig. 6 shows another example of frequency-adjacent systems.
Fig. 7 shows a partial block diagram of a mobile station in accordance with one embodiment of the present invention.
Fig. 8 shows a block diagram of a baseband signal processing unit in the mobile station in accordance with one embodiment of the present invention.
Fig. 9 shows a flowchart of an uplink transmission power control method based on an adjacent system in accordance with one embodiment of the present invention.
Fig. 10 shows another flowchart of an uplink transmission power control method based on an adjacent system in accordance with one embodiment of the present invention.
Fig. 11 shows a mobile communication system in accordance with one embodiment of the present invention.
Fig. 12 shows another flowchart of an uplink transmission power control method based on an adjacent system in accordance with one embodiment of the present invention.

**DETAILED DESCRIPTION OF THE PREFERRED EMBODIMENTS**

[DESCRIPTION OF NOTATIONS]

$10, 10_1, 10_2, 10_3, 10_4$ mobile station
$30, 30_1$ base station
$50, 50_1$ cell
101, 201 transceiving antenna
102, 202 amplifier unit
103, 203 transceiving unit
104, 204 baseband signal processing unit
105, 205 call processing unit
106 transmission line interface
111, 211 Layer-1 processing unit
112, 212 MAC processing unit
113 UL transmission power control unit
114 adjacent system information unit
206 application unit
213 transmission power determining unit
1000 mobile communication system

[BEST MODE OF CARRYING OUT THE INVENTION]

With reference to the accompanying drawings, preferred embodiments of the present invention are described below. Throughout the drawings, corresponding elements are referenced by the same reference numerals. It should be noted that the drawings are in schematic forms.

A mobile communication system in accordance with one embodiment of the present invention is described below.

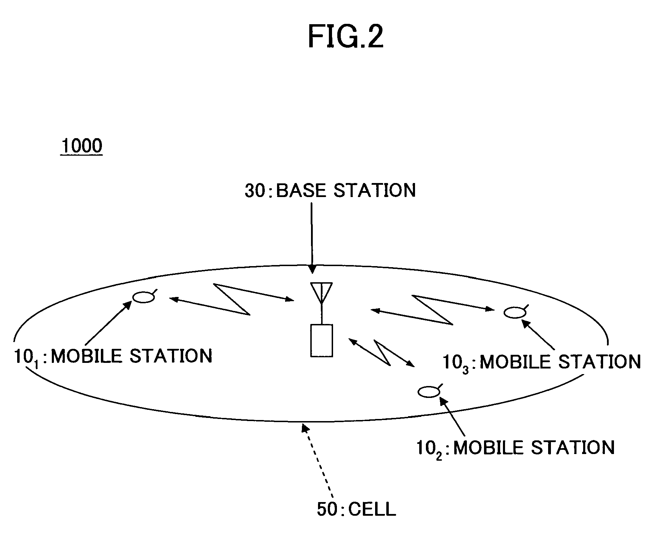

Fig. 2 shows a mobile communication system to which a communication control method in accordance with one embodiment of the present invention is applied.

As shown in Fig. 2, the mobile communication system 1000 includes multiple mobile stations 10 ($10_1$, $10_2$, $10_3$, ..., $10_n$) and a base station 30, where n is a positive integer (1 =< n). Fig. 2 specifically shows an LTE system in both uplink and downlink communications. A cell 50 represents an area within which the base station 30 can provide communications.

Since the mobile stations $10_1$, $10_2$, ..., $10_n$ in communication with the base station 30 have the same structure, features, and conditions, each of them is hereinafter referred to as a mobile station 10 unless otherwise specified.

Communication channels according to LTE are described below.

For the LTE downlink, a downlink shared channel which is shared by each mobile station 10 and a downlink control channel which is shared by each mobile station 10 are used. For the LTE uplink, an uplink shared channel which is shared by each mobile station 10 is used. In the present invention, uplink transmission power control is performed on the uplink shared channel. Pilot signals referred to as sounding reference signals are transmitted on the uplink.

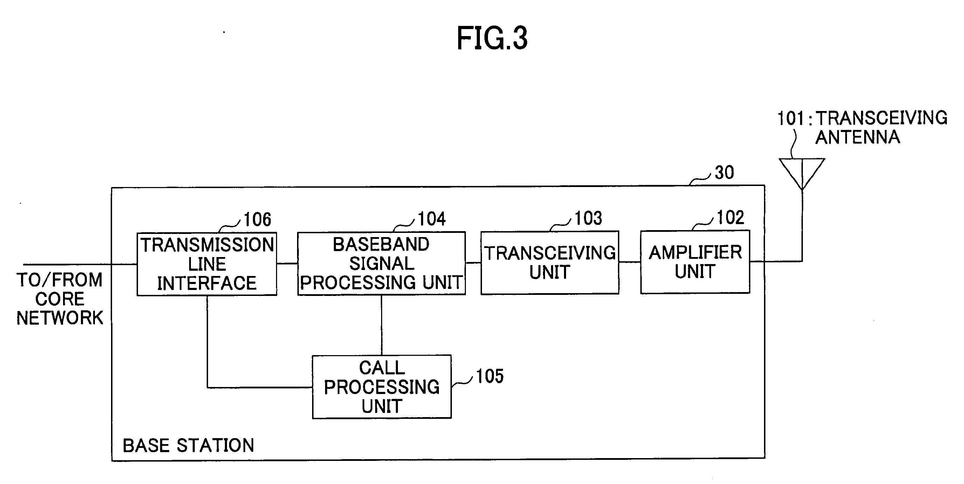

Fig. 3 shows a functional block diagram of the base station 30 shown in Fig. 2.

As shown in Fig. 3, the base station 30 in accordance with the present embodiment includes a transceiving antenna 101, an amplifier unit 102, a transceiving unit 103, a baseband signal processing unit 104, a call processing unit 105, and a transmission line interface 106.

Downlink packet data are supplied from a core network to the baseband signal processing unit 104 via the transmission line interface 106. The baseband signal processing unit 104 performs transmission processing for retransmission control (H-ARQ: Hybrid Automatic Repeat reQuest), scheduling, selection of the transmission format, channel encoding, Inverse Fast Fourier Transform (IFFT) processing, and so on, and then transfers baseband signals to the transceiving unit 103.

The transceiving unit 103 performs frequency conversion processing for converting the baseband signals supplied from the baseband signal processing unit 104 into the radio frequency band. Then, the signals are amplified by the amplifier unit 102 and transmitted from the transceiving antenna 101.

For uplink data, on the other hand, radio frequency signals received by the transceiving antenna 101 are amplified by the amplifier unit 102, and then frequency-converted into baseband signals by the transceiving unit 103. The baseband signal processing unit 104 performs Fast Fourier Transform (FFT) processing, error correction decoding, reception processing for retransmission control, and so on for the base band signals, and then transfers the results to the core network via the transmission line interface 106.

Regarding uplink data, the baseband signal processing unit 104 performs transmission power control on the uplink shared channel for each mobile station 10, as described below.

The call processing unit 105 performs radio resource management, call admission control, handover control, and so on.

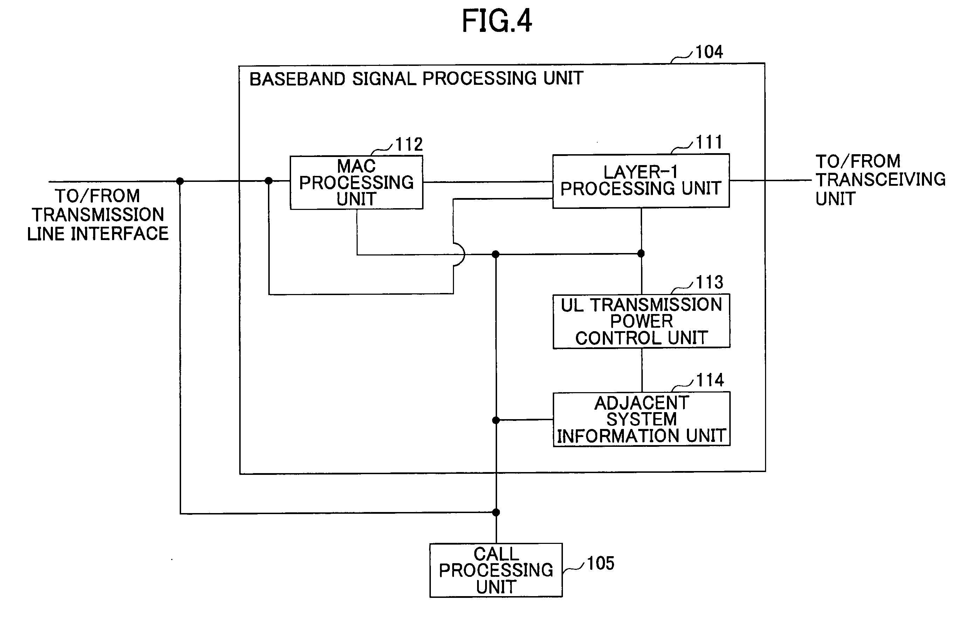

Fig. 4 shows a functional block diagram of the baseband signal processing unit 104. As shown in Fig. 4, the baseband signal processing unit 104 includes a Layer-1 processing unit 111, a MAC (Medium Access Control) processing unit 112, an UL transmission power control unit 113, and an adjacent system information unit 114.

The layer-1 processing unit 111, the MAC processing unit 112, the UL transmission power control unit 113, and the adjacent system information unit 114 in the baseband signal processing unit 104 are connected to the call processing unit 105. Also, the layer-1 processing unit 111, the MAC processing unit 112, the UL transmission power control unit 113, and the adjacent system information unit 114 are connected with each other.

The Layer-1 processing unit 111 performs channel encoding for downlink data, channel decoding for uplink data, IFFT processing, and FFT processing. The Layer-1 processing unit 111 also measures uplink received power level and supplies the uplink received power level to the UL transmission power control unit 113. For example, the received power level may be received total wide band power (RTWP) or Rise-over-Thermal (RoT).

The RTWP or RoT may be determined as a value in the whole system frequency band or a value in each resource block within the whole system frequency band. The Layer-1 processing unit 111 also measures the received power level of the sounding reference signal for each mobile station 10 and supplies the received power level of the sounding reference signal for each mobile station 10 to the UL transmission power control unit 113.

The MAC processing unit 112 performs transmission processing for H-ARQ (Hybrid ARQ) on the LTE downlink shared channel, scheduling for packets to be transmitted from the base station 30, determination of the transmission format on the downlink shared channel according to AMC (Adaptive Modulation and Coding), and so on. According to AMC, the modulation scheme and the coding rate for error correction are adaptively modified based on fluctuations of the propagation condition. The MAC processing unit 212 also performs reception processing for H-ARQ on the LTE uplink shared channel, scheduling for packets to be transmitted from each mobile station 10, and so on.

The UL transmission power control unit 113 receives both the uplink received power level and the received power level of the sounding reference signal for each mobile station 10 from the Layer-1 processing unit 111. Then, the UL transmission power control unit 113 determines an absolute allowable level (absolute grant) for each mobile station 10 based on both the uplink received power level and the received power level of the sounding reference signal for each mobile station 10. Then, the UL transmission power control unit 113 transmits the absolute allowable level (absolute grant) for each mobile station 10 to the corresponding mobile station 10 on the downlink control channel.

The absolute allowable level (absolute grant) for each mobile station 10 is a value used for determining transmission power on the uplink shared channel for the corresponding mobile station 10. Alternatively, the absolute allowable level may be a transmission power value per se on the uplink shared control channel for the mobile station 10 or a power ratio between the sounding reference signal and the uplink shared channel for the mobile station 10.

An approach for determining the absolute allowable level (absolute grant) for each mobile station 10 is described in detail below.

The UL transmission power control unit 113 may have a predetermined threshold Th1 for the received power level and determine the absolute allowable level (absolute grant) for the mobile station 10 , such that the received power level in the base station 30 is below the predetermined threshold Th1 when the mobile station 10 transmits signals on the uplink shared channel.

For example, it is assumed that the predetermined threshold Th1 is determined as -99 dBm. When the total received power level without the uplink shared channel is -107 dBm and the received power level of the sounding reference signal is -110 dBm, the power ratio between the sounding reference signal and the uplink shared channel may be determined as 10 dB. In this case, the received power level is calculated as -99.2 dBm, when signals are transmitted on the uplink shared channel. In this manner, the received power level in the base station 30 can be controlled to be below the predetermined threshold Th1.

The UL transmission power control unit 113 may determine the predetermined threshold Th1 based on information about frequency-adjacent systems (systems which are adjacent to the mobile communication system 1000 on the frequency axis), which is supplied from the adjacent system information unit 114 as described below.

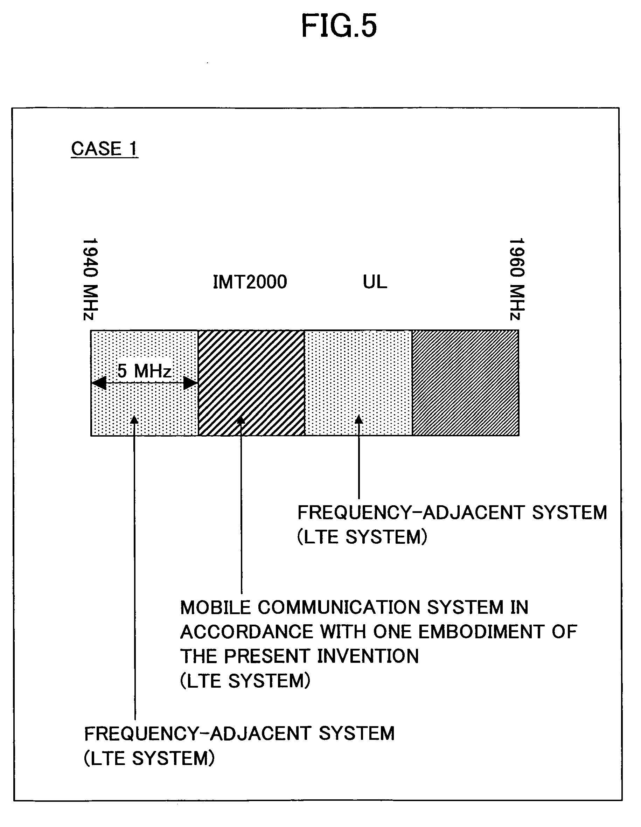

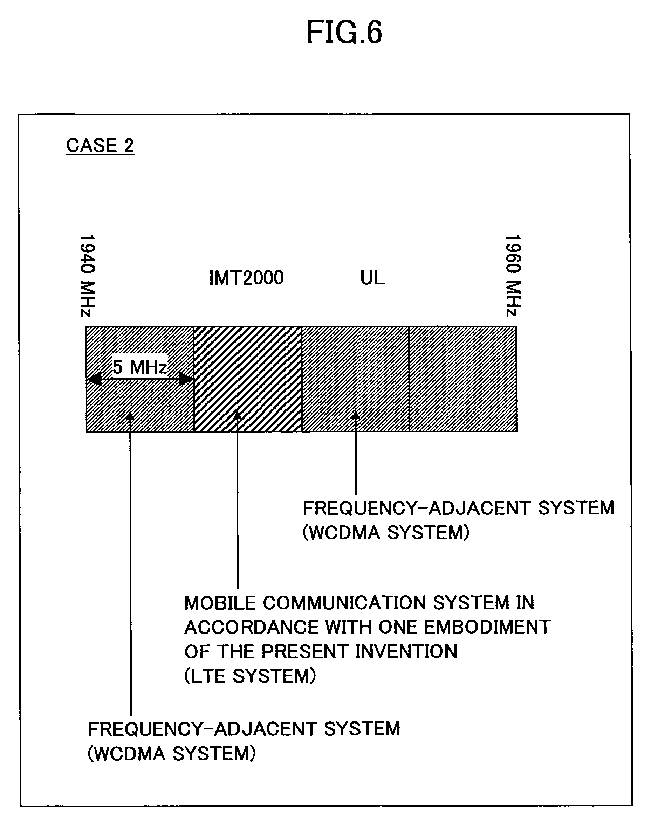

With reference to Figs. 5 and 6, examples of frequency-adjacent systems are described below.

The system with the 1940 MHz - 1945 MHz band and the system with the 1950 MHz - 1955 MHz are placed at corresponding ends of the system with the 1945 MHz - 1950 MHz in accordance with one embodiment of the present invention, and thus they are frequency-adjacent systems. In the case 1 shown in Fig. 5, the frequency-adjacent systems are LTE systems. In the case 2 shown in Fig. 6, the frequency-adjacent systems are WCDMA systems.

Although the following description focuses on uplink transmission power control in consideration of systems right next to the system in accordance with the present embodiment, uplink transmission power control may be performed in consideration of systems at some distance from the system in accordance with the present embodiment as well as systems right next to the system. For example, uplink transmission power control may be performed based on both the adjacent systems and the systems which are adjacent to their respective adjacent systems.

For example, when the frequency-adjacent systems are WCDMA systems (Case 2 in Fig. 6), the predetermined threshold Th1 may be determined as - 100 dBm. For example, when the frequency adjacent systems are LTE systems (Case 1 in Fig. 5), the predetermined threshold Th1 may be determined as -90 dBm.

In summary, in the case where the frequency-adjacent systems are WCDMA systems, uplink transmission control is performed such that the received power level in the base station 30 is lower than the received power level in the case where frequency-adjacent systems are LTE systems. In other words, in this case, uplink transmission control is performed such that uplink transmission power in the mobile station 10 is less than uplink transmission power in the case where frequency-adjacent systems are LTE systems. On the contrary, in the case where the frequency-adjacent systems are LTE systems, uplink transmission control is performed such that the received power level in the base station 30 is higher than the received power level in the case where frequency-adjacent systems are WCDMA systems. In other words, in this case, uplink transmission control is performed such that uplink transmission power in the mobile station 10 is larger in the case where frequency-adjacent systems are LTE systems than in the case where frequency-adjacent systems are WCDMA systems.

It should be noted that the frequency-adjacent systems are not restricted to WCDMA systems and LTE systems. It is possible to determine the predetermined threshold Th1 based on properties of GSM (Global System for Mobile Communications) systems, PDC (Personal Digital Cellular) systems, PHS (Personal Handy Phone) systems, and CDMA 2000 systems.

In the LTE system, the mobile station 10 may determine uplink transmission power based on a path loss on the propagation path between the mobile station 10 and the base station 30. Then, the UL transmission power control unit 113 determines a parameter for determining uplink transmission power based on the path loss on the propagation path between the mobile station 10 and the base station 30 and notifies the mobile station 10 of the parameter on the downlink.

An approach for determining uplink transmission power based on the path loss on the propagation path between the mobile station 10 and the base station 30 is described below.

For example, the mobile station 10 may determine uplink transmission power (Txpower) based on the path loss ($Pathloss_n$) on the propagation path between the mobile station 10 and the base station 30 according to the following equation (1):

$$Txpower_n = a*(Pathloss_n)^b, \qquad (1)$$

where 'a' and 'b' are parameters for determining uplink transmission power based on the path loss on the propagation path between the mobile station 10 and the base station 30. For example, increasing the value of 'a' results in increasing transmission power in the mobile station 10, and consequently increasing the uplink received power level in the base station 30. It should be noted that the equation (1) is calculated in a true value.

In addition, adjusting the value of 'b' results in adjusting the uplink received power level for the path loss. For example, when 'b' is equal to 1.0 (b = 1.0), uplink transmission power control is performed such that the uplink received power level in the base station 30 is maintained constant regardless of the path loss. For example, when 'b' is equal to 0.5 (b = 0.5), the uplink received power level in the base station 30 corresponding to the mobile station 10 with a lower path loss is higher than the uplink received power level in the base station 30 corresponding to the mobile station 10 with a higher path loss.

In the aforementioned approach for transmission power control, transmission power is determined based on the path loss on the propagation path between the mobile station 10 and the base station 30. Alternatively, transmission power may be determined based on SIR or CQI (Channel Quality Indicator) instead of the path loss.

The UL transmission power control unit 113 may determine the parameters 'a' and 'b' based on information about frequency-adjacent systems, which is supplied from the adjacent system information unit 114. For example, when the frequency-adjacent systems are WCDMA systems (Case 2 in Fig. 6), 'a' may be determined as 25 dB and 'b' may be determined as 0.8. For example, when the frequency adjacent systems are LTE systems (Case 1 in Fig. 5), 'a' may be determined as 45 dB and 'b' may be determined as 0.8. For example, in the case of a = 25 dB, 'a' in the equation (1) is equal to $10^{2.5}$ (a = $10^{2.5}$), since the equation (1) is calculated in a true value. It should be noted that the values of 'a' and 'b' are illustrative only and other values of 'a' and 'b' may be determined within the purpose of the present invention.

In summary, in the case where the frequency-adjacent systems are WCDMA systems, uplink transmission control is performed so as to decrease the received power level in the base station 30. In other words, in this case, uplink transmission control is performed so as to decrease uplink transmission power in the mobile station 10. On the contrary, in the case where the frequency-adjacent systems are LTE systems, uplink transmission control is performed so as to increase the received power level in the base station 30. In other words, in this case, uplink transmission control is performed so as to increase uplink transmission power in the mobile station 10.

It should be noted that the frequency-adjacent systems are not restricted to WCDMA systems and LTE systems. It is possible to determine the parameters 'a' and 'b' based on properties of GSM systems, PDC systems, PHS systems, and CDMA 2000 systems.

Alternatively, the mobile station 10 may determine uplink transmission power ($Txpower_n$) according to the following equation (2) instead of equation (1):

$$Txpower_n = min(Pmax,$$
$$10logM+Po+\alpha*PL+delta\_mcs+f(delta\_i)), \quad (2)$$

where Pmax is maximum transmission power in the mobile station 10 and M is the transmission bandwidth or the number of resource blocks used for transmission. The resource blocks used for transmission is provided by the base station 30 on the downlink control channel. In equation (2), Po is reference transmission power, which is provided by the base station 30 as broadcast information or an RRC message. $\alpha$ is a coefficient, which is provided by the base station 30 as broadcast information or an RRC message. PL is the path loss on the propagation path between the mobile station 10 and the base station 30. delta_mcs is a value defined based on the transmission format. The transmission format is provided by the base station 30 on the downlik control channel. It should be noted that the relationship between the transmission format and delta_mcs is provided as broadcast information or an RRC message. delta_i is a correction parameter, which is provided on the downlink control channel. f(delta_i) corresponds to an offset value such as +1 or -1. f(delta_i) is defined according to delta_i. An example of f(delta_i) is expressed as follows:

$$f(delta\_i = 0) = +1,$$

and

$$f(delta\_i = 1) = -1.$$

It should be noted that the offset value is not restricted to +1 or -1. Any value may be defined as the offset value. It should be noted that equation (2) is calculated in a decibel value (dB).

Po and $\alpha$ in equation (2) are equal to 'a' and 'b' in equation (1), respectively. For example, increasing the value of Po results in increasing transmission power in the mobile station 10, and consequently increasing the uplink received power level in the base station 30. In addition, adjusting the value of $\alpha$ results in adjusting the uplink received power level for the path loss. For example, when $\alpha$ is equal to 1.0 ($\alpha$ = 1.0), uplink transmission power control is performed such that the uplink received power level in the base station 30 is maintained constant regardless of the path loss. For example, when $\alpha$ is equal to 0.5 ($\alpha$ = 0.5), the uplink received power level in the base station 30 corresponding to the mobile station 10 with a lower path loss is higher than the uplink received power level in the base station 30 corresponding to the mobile station 10 with a higher path loss.

The UL transmission power control unit 113 may determine the parameters Po and $\alpha$ based on information about frequency-adjacent systems, which is supplied from the adjacent system information unit 114. The manner of determining the parameters Po and $\alpha$ based on information about frequency-adjacent systems is the same as the manner of determining the parameters 'a' and 'b'.

The adjacent system information unit 114 stores information about frequency-adjacent systems and supplies the information about frequency-adjacent systems to the UL transmission power control unit 113. The information about frequency-adjacent systems may be provided from the core network via the transmission line interface or determined as a parameter in the base station 30.

It should be noted that the information about frequency-adjacent systems is the type of frequency-adjacent system and specifically includes information such as a WCDMA system, an LTE system, a GSM system, a PDC system, a PHS system, or a CDMA 2000 system.

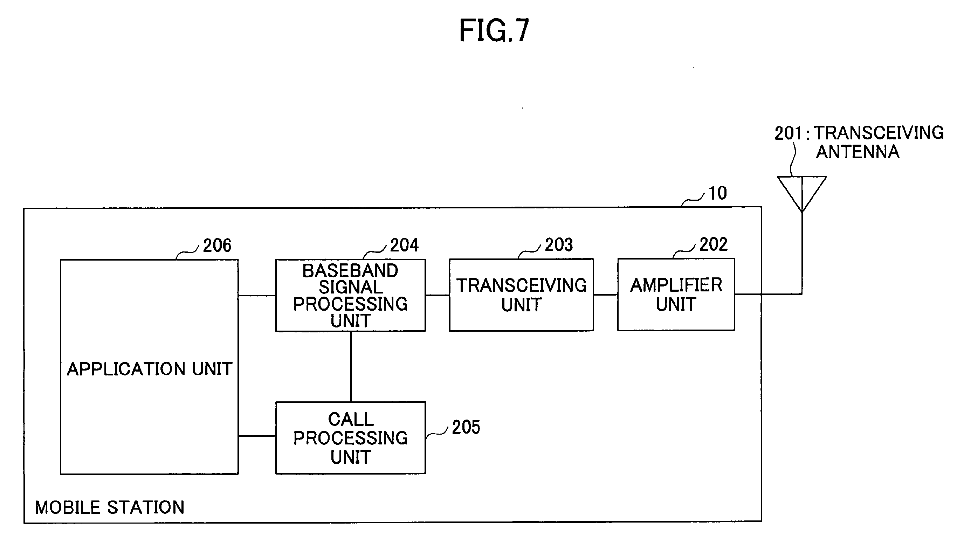

Fig. 7 shows a functional block diagram of the mobile station 10 shown in Fig. 2.

As show in Fig. 7, the mobile station 10 includes a transceiving antenna 201, an amplifier unit 202, a transceiving unit 203, a baseband signal processing unit 204, a call processing unit 205, and an application unit 206.

For downlink data, radio frequency signals received by the transceiving antenna 201 are amplified by the amplifier unit 202, and then frequency-converted into baseband signals by the transceiving unit 203. The baseband signal processing unit 204 performs FFT processing, error correction decoding, reception processing for retransmission control, and so on for the base band signals, and then transfers them to application unit 206.

On the other hand, uplink packet data are supplied from the application unit 206 to the baseband signal processing unit 204. The baseband signal processing unit 204 performs transmission processing for retransmission control (H-ARQ: Hybrid Automatic Repeat reQuest), selection of the transmission format, channel encoding, Inverse Fast Fourier Transform (IFFT) processing, and so on, and then transfers baseband signals to the transceiving unit 203.

The transceiving unit 203 performs frequency conversion processing for converting the baseband signals supplied from the baseband signal processing unit 204 into the radio frequency band. Then, the signals are amplified by the amplifier unit 202 and transmitted from the transceiving antenna 201. The amplifier unit 202 sets the transmission power level which is supplied from a transmission power determining unit 213, as described below.

Regarding uplink data, the baseband signal processing unit 204 performs transmission power control on the uplink shared channel, as described below.

The call processing unit 205 performs management of communications with the base station 30. The application unit 206 performs processing above the physical layer and the MAC layer.

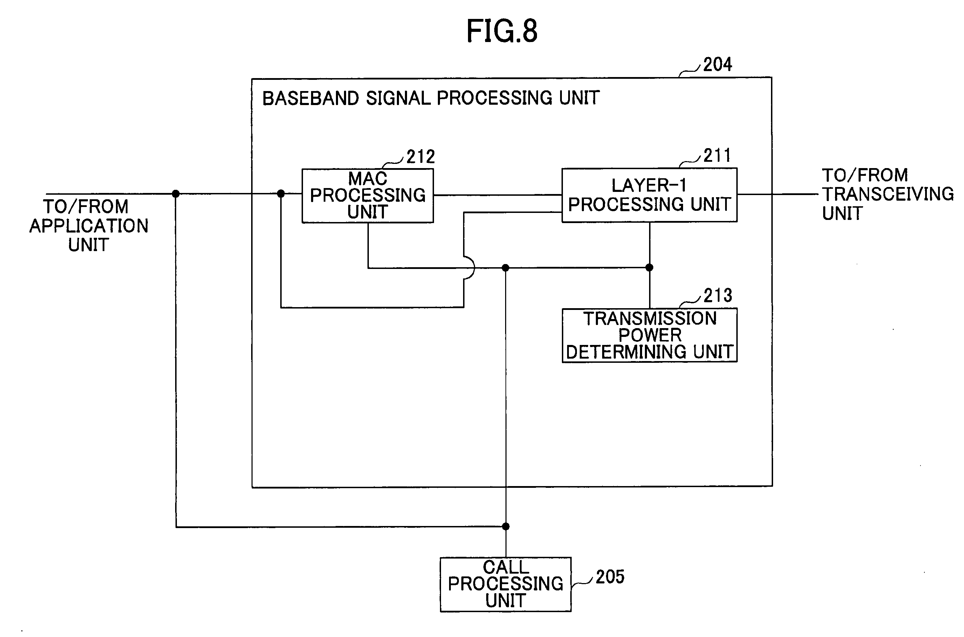

Fig. 8 shows a functional block diagram of the baseband signal processing unit 204. As shown in Fig. 8, the baseband signal processing unit 204 includes a Layer-1 processing unit 211, a MAC (Medium Access Control) processing unit 212, and a transmission power determining unit 213.

The layer-1 processing unit 211, the MAC processing unit 212, and the transmission power determining unit 213 in the baseband signal processing unit 204 are connected to the call processing unit 205. Also, the layer-1 processing unit 211, the MAC processing unit 212, and the transmission power determining unit 213 are connected with each other.

The Layer-1 processing unit 211 performs channel encoding for uplink data, channel decoding for downlink data, IFFT processing, and FFT processing. The Layer-1 processing unit 211 also receives both the absolute allowable level (absolute grant) for the mobile station 10 which is provided by the base station 30 on the downlink control channel and the parameter for determining uplink transmission power and supplies them to the transmission power determining unit 213.

The Layer-1 processing unit 211 calculates the path loss on the propagation path between the mobile station 10 and the base station 30 using pilot signals of known downlink signal sequences, and then supplies the path loss to the transmission power determining unit 213. The Layer-1 processing unit 211 may calculate SIR or CQI. The Layer-1 processing unit 211 may supply the calculated SIR or CQI, in addition to the path loss on the propagation path between the mobile station 10 and the base station 30, to the transmission power determining unit 213.

The MAC processing unit 212 performs transmission processing for H-ARQ (Hybrid ARQ) on the LTE uplink shared channel, determination of the transmission format on the uplink shared channel according to AMC, and so on. The MAC processing unit 122 also performs reception processing for H-ARQ on the LTE downlink shared channel and so on.

The transmission power determining unit 213 receives the absolute allowable level (absolute grant) for the mobile station 10, the parameter for determining uplink transmission power, and the path loss on the propagation path between the mobile station 10 and the base station 30 from the Layer-1 processing unit 211. The transmission power determining unit 213 also receives SIR or CQI, when the Layer-1 processing unit 211 supplies the SIR or CQI to the transmission power determining unit 213.

The transmission power determining unit 213 determines uplink transmission power based on the absolute allowable level (absolute grant) for the mobile station 10 and the parameter for determining uplink transmission power.

For example, the transmission power determining unit 213 determines transmission power based on both transmission power of the sounding reference signal and the power ratio between the sounding reference signal and the uplink shared channel for the mobile station 10, when the transmission power determining unit 213 receives, as the absolute allowable level (absolute grant), the power ratio between the sounding reference signal and the uplink shared channel for the mobile station 10. Alternatively, the transmission power determining unit 213 determines transmission power according to equation (1) based on the parameters 'a' and 'b' and the path loss ($Pathloss_n$), when the transmission power determining unit 213 receives the parameters 'a' and 'b' as the parameters for determining uplink transmission power:

$$Txpower_n = a*(Pathloss_n)^b \qquad (1)$$

Alternatively, the transmission power determining unit 213 may determine uplink transmission power for the

mobile station $10_n$ according to equation (2) instead of equation (1):

$$\texttt{Txpower}_n = \texttt{min(Pmax,}$$
$$\texttt{10logM+Po+}\alpha\texttt{*PL+delta\_mcs+f(delta\_i))} \qquad (2)$$

As mentioned above, two kinds of transmission power are determined. The mobile station 10 may use a lower level of transmission power or a higher level of transmission power among the two kinds of transmission power to set the actual transmission power level. Alternatively, the mobile station 10 may use one of the two kinds of transmission power to set the actual transmission power level and ignore the other. Alternatively, the mobile station 10 may use the average of the two kinds of transmission power to set the actual transmission power level. The determined transmission power level is supplied to the amplifier unit 202 via the Layer-1 processing unit 211 and the transceiving unit 203.

In the embodiment, the UL transmission power control unit 113 in the base station 30 determines the absolute allowable level (absolute grant) and the parameter for determining uplink transmission power and the transmission power determining unit 213 in the mobile station 10 determines actual transmission power. Alternatively, the mobile station 10 may determine the absolute allowable level (absolute grant) and the parameter for determining uplink transmission power, for example.

A communication control method in accordance with one embodiment of the present invention is described below.

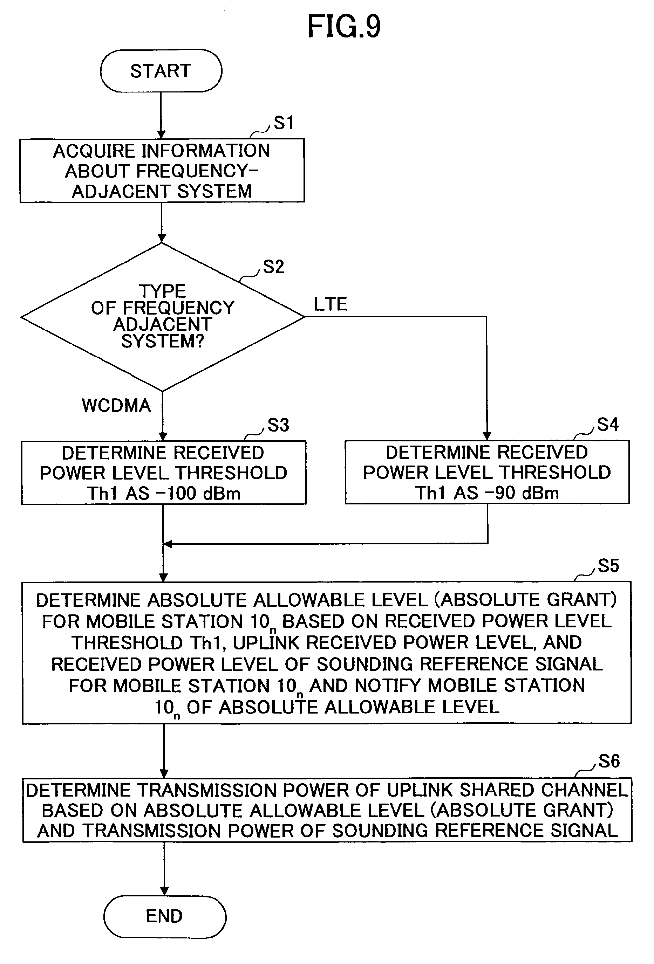

With reference to Fig. 9, operations of the communication control method for determining the absolute allowable level (absolute grant) for the mobile station 10 based on the type of the frequency-adjacent system and performing uplink transmission power control based on the absolute allowable level (absolute grant) for the mobile station 10 are described below.

At step S1, the neighbor system information unit 114 in the base station 30 acquires information about frequency-adjacent systems.

At step S2, it is determined whether the type of the frequency-adjacent system is a WCDMA system (Case 2 in Fig. 6) or a LTE system (Case 1 in Fig. 5). If the type of the frequency-adjacent system is the WCDMA system, the method proceeds to step S3. If the type of the frequency-adjacent system is the LTE system, the method proceeds to step S4.

At step S3, the UL transmission power control unit 113 in the base station 30 determines the predetermined threshold Th1 for the received power level as -100 dBm.

At step S4, the UL transmission power control unit 113 in the base station 30 determines the predetermined threshold Th1 for the received power level as -90 dBm.

At step S5, the UL transmission power control unit 113 in the base station 30 determines the absolute allowable level (absolute grant) for the mobile station $10_n$ based on the predetermined threshold Th1 for the received power level, the uplink received power level, and the received power level of the sounding reference signal for the mobile station $10_n$. The UL transmission power control unit 113 notifies the mobile station $10_n$ of the absolute allowable level (absolute grant).

At step S6, the mobile station $10_n$ determines transmission power of the uplink shared channel based on the absolute allowable level (absolute grant) and transmission power of the sounding reference signal.

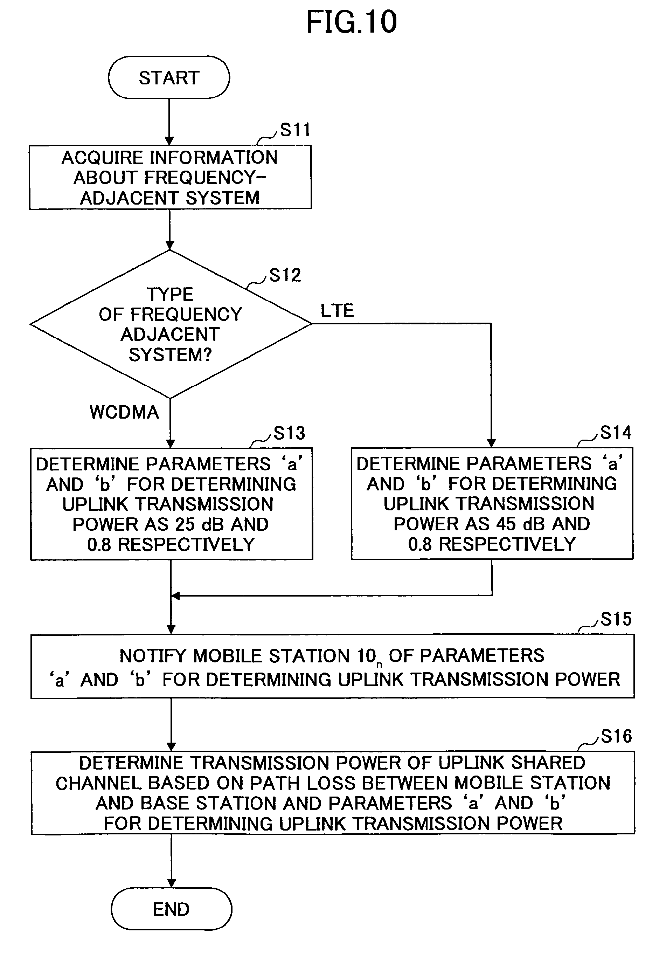

With reference to Fig. 10, operations of the communication control method for determining the parameters 'a' and 'b' for determining uplink transmission power based on the type of frequency-adjacent system and performing uplink transmission power control based on the parameters 'a' and 'b' for determining uplink transmission power are described below.

At step S11, the neighbor system information unit 114 in the base station 30 acquires information about frequency-adjacent systems.

At step S12, it is determined whether the type of the frequency-adjacent system is a WCDMA system (Case 2 in Fig. 6) or a LTE system (Case 1 in Fig. 5). If the type of the frequency-adjacent system is the WCDMA system, the method proceeds to step S13. If the type of the frequency-adjacent system is the LTE system, the method proceeds to step S14.

At step S13, the UL transmission power control unit 113 in the base station 30 determines the parameters 'a' and 'b' for determining uplink transmission power as 25 dB and 0.8, respectively.

At step S14, the UL transmission power control unit 113 in the base station 30 determines the parameters 'a' and 'b' for determining uplink transmission power as 45 dB and 0.8, respectively.

At step S15, the UL transmission power control unit 113 in the base station 30 notifies the mobile station $10_n$ of the parameters 'a' and 'b' for determining uplink transmission power.

At step S16, the mobile station $10_n$ determines transmission power of the uplink shared channel based on the path loss between the mobile station $10_n$ and the base station 30 and the parameters 'a' and 'b' for determining uplink transmission power.

It should be noted that the values of 'a' and 'b' are illustrative only and other values of 'a' and 'b' may be determined within the purpose of the present invention.

In the communication control method, the parameters 'a' and 'b' for determining uplink transmission power in equation (1) are determined based on the type of the frequency-adjacent system and uplink transmission power control is performed based on the parameters 'a' and 'b' for determining uplink transmission power. Alternatively, the parameters Po and $\alpha$ for determining uplink transmission power in equation (2) may be determined and uplink transmission power control may be performed based on the parameters Po and $\alpha$ for determining uplink transmission power. The detailed operations of the communication control methods are the same as steps S11-S16.

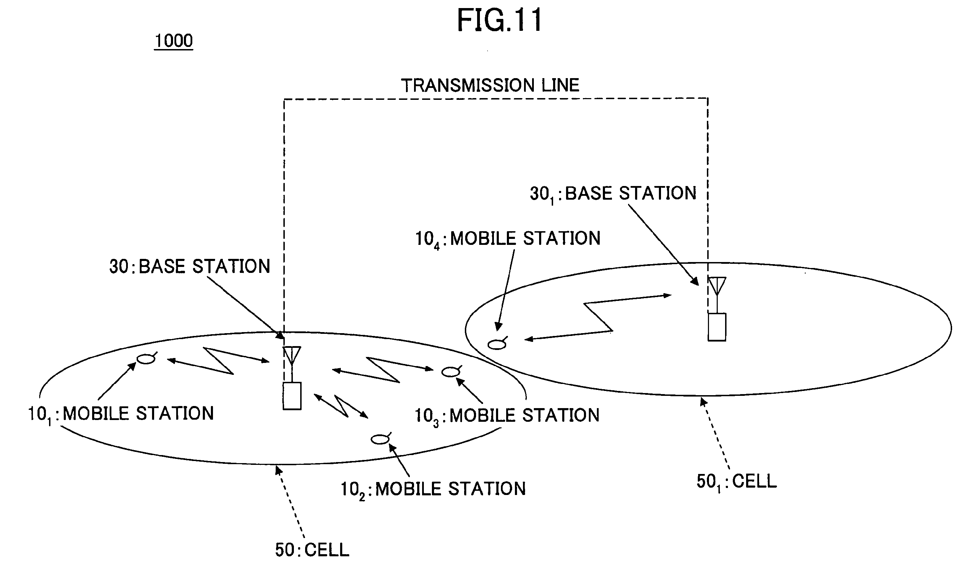

Fig. 11 shows a mobile communication system to which a communication control method in accordance with another embodiment of the present invention is applied.

The mobile communication system shown in Fig. 11 is basically the same as the mobile communication system shown in Fig. 2. The mobile communication system shown in Fig. 11 further includes a feature of suppressing interference power from adjacent cells. For this reason, the adjacent cell $50_1$ is shown in Fig. 11. As shown in Fig. 11, the base station $30_1$ provides communications within the adjacent cell $50_1$ and the mobile station $10_4$ communicates with the base station $30_1$ within the adjacent cell $50_1$.

Since the LTE system does not provide soft handover on the uplink, the mobile station 10 communicates with a single base station rather than with multiple base stations on the uplink. For example, the mobile station $10_4$ communicates only with the base station $30_1$ and does not communicate with the base station 30. Although the mobile station $10_4$ does not communicate with the base station 30, signals transmitted from the mobile station $10_4$ can arrive at the base station 30. Consequently, signals transmitted from the mobile station $10_4$ can cause interference in the base station 30.

In order to reduce interference in the base station 30 caused by the mobile station $10_4$ situated within the adjacent cell $50_1$, the base station 30 can issue a command for decreasing signal power to the mobile station $10_4$ in the mobile communication system in accordance with the other embodiment of the present invention, when the amount of interference in the base station 30 caused by the mobile station $10_4$ is large.

The command for decreasing signal power is hereinafter referred to as a relative allowable level (relative grant). The relative allowable level (relative grant) is a command for relatively adjusting transmission power such as decreasing transmission power of the uplink shared channel by 3 dB. The relative allowable level (relative grant) may be transmitted to all or some of the mobile stations situated within the adjacent cell $50_1$.

The structure of the base station 30 in accordance with the present embodiment is almost identical with the structure of the base station 30 shown in Figs. 3 and 4. The following modifications are made in the Layer-1 processing unit 111 and the UL transmission power control unit 113 in Fig. 4.

Features other than the following modifications are identical with the features of the base station 30 in accordance with the aforementioned embodiment.

The Layer-1 processing unit 111 measures the received power level of the signal transmitted from the mobile station $10_4$ situated within the adjacent cell $50_1$. The received power level of the signal transmitted from the mobile station $10_4$ is included in the uplink received power level. The Layer-1 processing unit 111 supplies to the UL transmission power control unit 113 the received power level of the signal transmitted from the mobile station $10_4$ situated within the adjacent cell $50_1$.

The UL transmission power control unit 113 receives from the Layer-1 processing unit 111 the received power level of the signal transmitted from the mobile station $10_4$ situated within the adjacent cell $50_1$.

The UL transmission power control unit 113 generates the relative allowable level (relative grant) which instructs the mobile station $10_4$ to decrease signal power, when the received power level of the signal transmitted from the mobile station $10_4$ situated within the adjacent cell $50_1$ is high. The UL transmission power control unit 113 notifies the mobile station(s) situated within the adjacent cell $50_1$ of the relative allowable level (relative grant) on the downlink control channel. Only the mobile station $10_4$ or all of the mobile stations situated within the adjacent cell $50_1$ may be notified of the relative allowable level (relative grant).

For example, the UL transmission power control unit 113 may have a predetermined threshold Th2 for the received power level and generate the relative grant which instructs the mobile station(s) situated within the adjacent cell $50_1$ to decrease uplink transmission power by 3 dB, when the received power level of the signal transmitted from the mobile station $10_4$ situated within the adjacent cell $50_1$ is above the predetermined threshold Th2.

The UL transmission power control unit 113 may determine the predetermined threshold Th2 based on information about frequency-adjacent systems, which is supplied from the adjacent system information unit 114 as described below.

For example, when the frequency-adjacent systems are WCDMA systems (Case 2 in Fig. 6), the predetermined threshold Th2 may be determined as - 100 dBm. For example, when the frequency adjacent systems are LTE systems (Case 1 in Fig. 5), the predetermined threshold Th2 may be determined as -90 dBm.

In summary, in the case where the frequency-adjacent systems are WCDMA systems, uplink transmission control is performed such that the received power level in the base station is lower than the received power level in the case where frequency-adjacent systems are LTE systems. In other words, in this case, uplink transmission control is performed such that uplink transmission power in the mobile station in the case where frequency-adjacent systems are WCDMA systems is less than uplink transmission power in the case where frequency-adjacent systems are LTE systems. On the contrary, in the case where the frequency-adjacent systems are LTE systems, uplink transmission control is performed such that the received power level in the base station is higher than the received power level in the case where frequency-adjacent systems are WCDMA systems. In other words, in this case, uplink transmission control is performed such that uplink transmission power in the mobile station in the case where frequency-adjacent systems are LTE systems is larger than uplink transmission power in the case where frequency-adjacent systems are WCDMA systems.

It should be noted that the frequency-adjacent systems are not restricted to WCDMA systems and LTE systems. It is possible to determine the predetermined threshold Th2 based on properties of GSM systems, PDC systems, PHS systems, and CDMA 2000 systems.

The structure of the mobile station 10 in accordance with the present embodiment is almost identical with the structure of the mobile station 10 shown in Figs. 7 and 8. The following modifications are made in the Layer-1 processing unit 211 and the transmission power determining unit 213 in Fig. 8. Features other than the following modifications are identical with the features of the mobile station 10 in accordance with the aforementioned embodiment.

The Layer-1 processing unit 211 receives the relative grant transmitted from the base station 30 in the adjacent cell, when the base station 30 in the adjacent cell transmits the relative grant. The Layer-1 processing unit 211 supplies to the transmission power determining unit 213 the relative grant transmitted from the base station 30 in the adjacent cell.

The transmission power determining unit 213 receives from the Layer-1 processing unit 213 the relative grant transmitted from the base station 30 in the adjacent cell. For example, when the relative grant transmitted from the base station 30 in the adjacent cell is the command for relatively adjusting transmission power such as deceasing transmission power of the uplink shared channel by 3 dB, the transmission power determining unit 213 adjusts the amount of transmission power, which is determined based on the absolute grant as described above, by 3 dB.

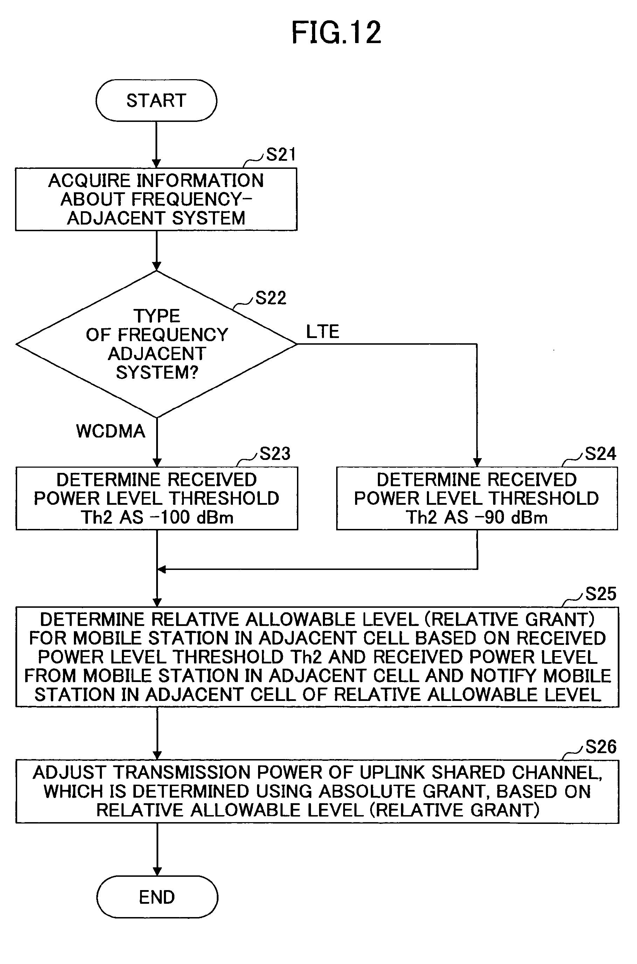

With reference to Fig. 12, operations of the communication control method for determining the relative allowable level (relative grant) for the mobile station situated within the adjacent cell based on the type of the frequency-adjacent system and performing uplink transmission power control based on the relative allowable level (relative grant) are described below.

At step S21, the neighbor system information unit 114 in the base station 30 acquires information about frequency-adjacent systems.

At step S22, it is determined whether the type of the frequency-adjacent system is a WCDMA system (Case 2 in Fig. 6) or a LTE system (Case 1 in Fig. 5). If the type of the frequency-adjacent system is the WCDMA system, the method proceeds to step S23. If the type of the frequency-adjacent system is the LTE system, the method proceeds to step S24.

At step S23, the UL transmission power control unit 113 in the base station 30 determines the predetermined threshold Th2 for the received power level as -100 dBm.

At step S24, the UL transmission power control unit 113 in the base station 30 determines the predetermined threshold Th2 for the received power level as -90 dBm.

At step S25, the UL transmission power control unit 113 in the base station 30 determines the relative allowable level (relative grant) for the mobile station situated within the adjacent cell based on the predetermined threshold Th2 for the received power level and the uplink received power level from the mobile station situated within the adjacent cell. The UL transmission power control unit 113 notifies the mobile station situated within the adjacent cell of the relative allowable level (relative grant).

At step S26, the mobile station in the adjacent cell adjusts transmission power, which is determined using the absolute grant as described above, based on the relative allowable level (relative grant).

According to the present embodiment, it is possible to provide a mobile communication system, a base station, a mobile station, and a communication control method capable of reducing an adverse effect in adjacent systems and providing appropriate mobile communication services by means of uplink transmission power control.

The mobile communication system, the base station, or the mobile station in accordance with an embodiment of the present invention can perform uplink transmission power control based on the type of the frequency-adjacent system.

The communication control method in accordance with an embodiment of the present invention can perform uplink transmission power control based on the type of the frequency-adjacent system.

In the embodiment, the base station 30 generates and transmits the relative grant to the mobile station $10_4$ which communicates with the base station $30_1$ within the adjacent cell $50_1$. Alternatively, the base station 30 may transmit the relative grant to the mobile station $10_n$ which communicates with the base station 30 within its own cell 50. In this case, the structures of the base station 30 and the mobile station 10 as well as the operations of the mobile communication methods remain the same except that the relative grant is transmitted to the mobile station within the own cell instead of the mobile station within the adjacent cell.

The present invention has been described in accordance with the embodiments. However, it should be understood that the detailed description and drawings, which partially constitute the present disclosure do not limit the present invention. From this disclosure, various alternative embodiments, modifications and operational technologies will become apparent to a person skilled in the art.

As a matter of course, the present invention includes various embodiments which are not specifically described herein. Accordingly, the scope of the present invention should be appropriately defined only by the claims in view of the detailed description.

For convenience of the detailed description, the present invention has been described in some sections. However, these sections are not essential to the present invention, but two or more embodiments may be combined if desired. In addition, specific values are used in order to facilitate the understanding of the present invention. However, these values are illustrative only unless otherwise specified and other values may be used.

The present invention has been described with reference to the embodiments. However, the embodiments are illustrative only and various modifications, changes, alternatives, and replacements will be become possible for a person skilled in the art. For convenience of the detailed description, apparatuses in accordance with the embodiments of the present invention have been described using functional block diagrams. However, these apparatuses may be implemented in hardware, software, or the combination of them. The present invention is not limited to the embodiments and various modifications, changes, alternatives, and replacements can be made without departing from the scope of the present invention.

[INDUSTRIAL APPLICABILITY]

A mobile communication system, a base station, a mobile station, and a communication control method in accordance with the present invention are applicable to any radio communication system.

This international patent application is based on Japanese Priority Application No. 2006-303163 filed on November 8, 2006, the entire contents of which are incorporated herein by reference.

**Claims**

1. A mobile communication system including a base station and a mobile station for communicating with the base station, comprising:

   a control unit configured to perform uplink transmission power control based on a type of a frequency-adjacent system.

2. The mobile communication system as claimed in Claim 1, wherein:

   the type of the frequency-adjacent system includes at least one of
   a WCDMA system,
   a GSM system,
   a PDC system,
   a PHS system,
   a CDMA 2000 system, and
   an LTE system.

3. The mobile communication system as claimed in Claim 1, wherein:

   the control unit determines an upper limit of an uplink received power level based on the type of the frequency-adjacent system and determines uplink transmission power based on the upper limit of the uplink received power level.

4. The mobile communication system as claimed in Claim 1, wherein:

   the control unit determines a parameter for determining uplink transmission power based on the type of the frequency-adjacent system and determines the uplink transmission power based on the parameter for determining the uplink transmission power and a path loss between the base station and the mobile station.

5. The mobile communication system as claimed in Claim 4, wherein:

the control unit calculates the uplink transmission power (Txpower) based on

$$\mathrm{Txpower} = a*(\mathrm{Pathloss})^b,$$

where 'a' and 'b' are parameters for determining the uplink transmission power and 'Pathloss' is the path loss between the base station and the mobile station.

6. The mobile communication system as claimed in Claim 3, wherein:

the control unit decreases either the upper limit of the uplink received power level or the parameter for determining the uplink transmission power, if the type of the frequency-adjacent system is a WCDMA system, and
the control unit increases either the upper limit of the uplink received power level or the parameter for determining the uplink transmission power, if the type of the frequency-adjacent system is an LTE system.

7. The mobile communication system as claimed in Claim 1, wherein:

the mobile communication system comprises a Long Term Evolution communication system.

8. A base station in a mobile communication system including the base station and a mobile station for communicating with the base station, comprising:

a control unit configured to perform uplink transmission power control based on a type of a frequency-adjacent system.

9. A mobile station in a mobile communication system including a base station and the mobile station for communicating with the base station, comprising:

a control unit configured to perform uplink transmission power control based on a type of a frequency-adjacent system.

10. A communication control method in a mobile communication system including a base station and a mobile station for communicating with the base station, comprising the step of:

performing uplink transmission power control based on a type of a frequency-adjacent system.

# FIG.1

1920 MHz    IMT2000    UL    1980 MHz    2110 MHz    IMT2000    DL    2170 MHz

5 MHz

20 MHz
CDMA2000 SYSTEM

20 MHz
WCDMA SYSTEM
(INCLUDING FOUR FREQUENCY BANDS)

EP 2 081 305 A1

# FIG.2

1000

30:BASE STATION

10₁:MOBILE STATION

10₃:MOBILE STATION

10₂:MOBILE STATION

50:CELL

# FIG.3

EP 2 081 305 A1

# FIG.4

BASEBAND SIGNAL PROCESSING UNIT 104

MAC PROCESSING UNIT 112

LAYER-1 PROCESSING UNIT 111

UL TRANSMISSION POWER CONTROL UNIT 113

ADJACENT SYSTEM INFORMATION UNIT 114

TO/FROM TRANSMISSION LINE INTERFACE

TO/FROM TRANSCEIVING UNIT

CALL PROCESSING UNIT 105

EP 2 081 305 A1

# FIG.5

CASE 1

1940 MHz

IMT2000    UL

1960 MHz

5 MHz

FREQUENCY-ADJACENT SYSTEM
(LTE SYSTEM)

MOBILE COMMUNICATION SYSTEM IN
ACCORDANCE WITH ONE EMBODIMENT OF
THE PRESENT INVENTION
(LTE SYSTEM)

FREQUENCY-ADJACENT SYSTEM
(LTE SYSTEM)

# FIG.6

CASE 2

1940 MHz

1960 MHz

IMT2000    UL

5 MHz

FREQUENCY-ADJACENT SYSTEM
(WCDMA SYSTEM)

MOBILE COMMUNICATION SYSTEM IN
ACCORDANCE WITH ONE EMBODIMENT
OF THE PRESENT INVENTION
(LTE SYSTEM)

FREQUENCY-ADJACENT SYSTEM
(WCDMA SYSTEM)

# FIG.7

201 : TRANSCEIVING ANTENNA

10

202 AMPLIFIER UNIT

203 TRANSCEIVING UNIT

204 BASEBAND SIGNAL PROCESSING UNIT

205 CALL PROCESSING UNIT

206 APPLICATION UNIT

MOBILE STATION

# FIG.8

BASEBAND SIGNAL PROCESSING UNIT — 204

TO/FROM APPLICATION UNIT

MAC PROCESSING UNIT — 212

LAYER-1 PROCESSING UNIT — 211

TO/FROM TRANSCEIVING UNIT

TRANSMISSION POWER DETERMINING UNIT — 213

CALL PROCESSING UNIT — 205

EP 2 081 305 A1

# FIG.9

```
        ┌──────────────┐
        │    START     │
        └──────┬───────┘
               │
               ▼                          S1
    ┌─────────────────────────┐
    │   ACQUIRE INFORMATION    │
    │     ABOUT FREQUENCY-     │
    │     ADJACENT SYSTEM      │
    └────────────┬────────────┘
                 │
                 ▼                        S2
              ╱──────────╲
           ╱   TYPE       ╲        LTE
        ╱  OF FREQUENCY    ╲──────────────┐
        ╲   ADJACENT       ╱              │
           ╲  SYSTEM?   ╱                 │
              ╲──────╱                    │
           WCDMA │                        │
                 ▼            S3          ▼              S4
    ┌────────────────────────┐  ┌────────────────────────┐
    │  DETERMINE RECEIVED     │  │  DETERMINE RECEIVED    │
    │ POWER LEVEL THRESHOLD    │  │ POWER LEVEL THRESHOLD  │
    │   Th1 AS -100 dBm        │  │   Th1 AS -90 dBm       │
    └───────────┬─────────────┘  └───────────┬────────────┘
                │◄───────────────────────────┘
                ▼                                        S5
```

DETERMINE ABSOLUTE ALLOWABLE LEVEL (ABSOLUTE GRANT) FOR MOBILE STATION $10_n$ BASED ON RECEIVED POWER LEVEL THRESHOLD Th1, UPLINK RECEIVED POWER LEVEL, AND RECEIVED POWER LEVEL OF SOUNDING REFERENCE SIGNAL FOR MOBILE STATION $10_n$ AND NOTIFY MOBILE STATION $10_n$ OF ABSOLUTE ALLOWABLE LEVEL

S6

DETERMINE TRANSMISSION POWER OF UPLINK SHARED CHANNEL BASED ON ABSOLUTE ALLOWABLE LEVEL (ABSOLUTE GRANT) AND TRANSMISSION POWER OF SOUNDING REFERENCE SIGNAL

```
        ┌──────────────┐
        │     END      │
        └──────────────┘
```

# FIG.10

START

ACQUIRE INFORMATION
ABOUT FREQUENCY-
ADJACENT SYSTEM

S11

TYPE
OF FREQUENCY
ADJACENT
SYSTEM?

S12

WCDMA

LTE

DETERMINE PARAMETERS 'a'
AND 'b' FOR DETERMINING
UPLINK TRANSMISSION
POWER AS 25 dB AND
0.8 RESPECTIVELY

S13

DETERMINE PARAMETERS 'a'
AND 'b' FOR DETERMINING
UPLINK TRANSMISSION
POWER AS 45 dB AND
0.8 RESPECTIVELY

S14

NOTIFY MOBILE STATION $10_n$ OF PARAMETERS
'a' AND 'b' FOR DETERMINING UPLINK TRANSMISSION POWER

S15

DETERMINE TRANSMISSION POWER OF UPLINK SHARED
CHANNEL BASED ON PATH LOSS BETWEEN MOBILE STATION
AND BASE STATION AND PARAMETERS 'a' AND 'b'
FOR DETERMINING UPLINK TRANSMISSION POWER

S16

END

# FIG.11

1000

TRANSMISSION LINE

$30_1$:BASE STATION

$10_4$:MOBILE STATION

30:BASE STATION

$10_1$:MOBILE STATION

$10_3$:MOBILE STATION

$10_2$:MOBILE STATION

$50_1$:CELL

50:CELL

# FIG.12

START

S21

ACQUIRE INFORMATION
ABOUT FREQUENCY-
ADJACENT SYSTEM

S22

TYPE
OF FREQUENCY
ADJACENT
SYSTEM?

LTE

WCDMA

S23

DETERMINE RECEIVED
POWER LEVEL THRESHOLD
Th2 AS −100 dBm

S24

DETERMINE RECEIVED
POWER LEVEL THRESHOLD
Th2 AS −90 dBm

S25

DETERMINE RELATIVE ALLOWABLE LEVEL (RELATIVE GRANT)
FOR MOBILE STATION IN ADJACENT CELL BASED ON RECEIVED
POWER LEVEL THRESHOLD Th2 AND RECEIVED POWER LEVEL
FROM MOBILE STATION IN ADJACENT CELL AND NOTIFY MOBILE
STATION IN ADJACENT CELL OF RELATIVE ALLOWABLE LEVEL

S26

ADJUST TRANSMISSION POWER OF UPLINK SHARED CHANNEL,
WHICH IS DETERMINED USING ABSOLUTE GRANT, BASED ON
RELATIVE ALLOWABLE LEVEL (RELATIVE GRANT)

END

<table>
<tr><td colspan="2" align="center">**INTERNATIONAL SEARCH REPORT**</td><td>International application No.<br>PCT/JP2007/071207</td></tr>
</table>

| A. CLASSIFICATION OF SUBJECT MATTER |
| --- |
| *H04B7/26*(2006.01)i |

According to International Patent Classification (IPC) or to both national classification and IPC

| B. FIELDS SEARCHED |
| --- |
| Minimum documentation searched (classification system followed by classification symbols)<br>H04B7/26 |

Documentation searched other than minimum documentation to the extent that such documents are included in the fields searched
Jitsuyo Shinan Koho        1922-1996   Jitsuyo Shinan Toroku Koho    1996-2008
Kokai Jitsuyo Shinan Koho   1971-2008   Toroku Jitsuyo Shinan Koho    1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | WO 2005/117473 A1 (Matsushita Electric Industrial Co., Ltd.),<br>08 December, 2005 (08.12.05),<br>Par. Nos. [0158] to [0195], [0204] to [0227]<br>& EP 1744571 A1 | 1,4,7-10<br>2<br>3,5,6 |
| Y<br>A | JP 2001-285192 A (Toshiba Corp.),<br>12 October, 2001 (12.10.01),<br>Full text; all drawings<br>& US 2001-285192 A1 | 2<br>1,3-10 |
| A | JP 2001-238251 A (NEC Corp.),<br>31 August, 2001 (31.08.01),<br>Full text; all drawings<br>& US 2001/016499 A1      & EP 1128573 A2 | 1-10 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>29 January, 2008 (29.01.08) | Date of mailing of the international search report<br>12 February, 2008 (12.02.08) |
| --- | --- |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2007/071207

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2002-325281 A  (Hitachi Kokusai Electric Inc.),<br>08 November, 2002 (08.11.02),<br>Full text; all drawings<br>(Family: none) | 1-10 |
| A | JP 2004-336387 A  (Sharp Corp.),<br>25 November, 2004 (25.11.04),<br>Full text; all drawings<br>(Family: none) | 1-10 |

Form PCT/ISA/210 (continuation of second sheet) (April 2007)

**REFERENCES CITED IN THE DESCRIPTION**

**Patent documents cited in the description**

• JP 2006303163 A